# EUROPÄISCHE PATENTSCHRIFT

(11) **EP 3 883 099 B1**
(45) Veröffentlichungstag und Bekanntmachung des Hinweises auf die Patenterteilung: **22.11.2023**
(21) Anmeldenummer: 21163131.2
(22) Anmeldetag: 17.03.2021
(51) Int. Cl.: H02K 5/20, H02K 9/19

(54) **KÜHLEINHEIT FÜR EINE ELEKTRISCHE MASCHINE UND VERFAHREN ZUM HERSTELLEN EINER KÜHLEINHEIT**
COOLING UNIT FOR ELECTRICAL MACHINE AND METHOD FOR PRODUCING A COOLING UNIT
UNITÉ DE REFROIDISSEMENT POUR UNE MACHINE ÉLECTRIQUE ET PROCÉDÉ DE FABRICATION D'UNE UNITÉ DE REFROIDISSEMENT

(30) Priorität: 17.03.2020 DE 102020107234
(43) Veröffentlichungstag der Anmeldung: 22.09.2021
(73) Patentinhaber: SEG Automotive Germany GmbH, 70499 Stuttgart (DE)
(72) Erfinder: HENS, Jonas, 70329 Stuttgart (DE)
(74) Vertreter: DehnsGermany Partnerschaft von Patentanwälten

(56) Entgegenhaltungen:
- DE-A1-102018 114 825
- US-A1- 2005 268 464
- US-B2- 8 633 624

## Beschreibung

Die vorliegende Erfindung betrifft eine Kühleinheit für eine elektrische Maschine, eine elektrische Maschine mit einer solchen Kühleinheit, sowie ein Verfahren zum Herstellen einer solchen Kühleinheit.

### Stand der Technik

In elektrischen Maschinen, die motorisch und/oder generatorisch betrieben werden können, wird durch Energiewandlungsprozesse Verlustleistung in Form von Wärme dissipiert. In hochausgenutzten Maschinen ist demnach eine effiziente Wärmeabfuhr bzw. Kühlung zweckmäßig. Dazu eignen sich bevorzugt Kühlungen mit einem Fluid wie Wasser als Kühlmittel, insbesondere sog. Mantelkühlungen bzw. Wassermantelkühlungen am Stator der elektrischen Maschine.

Solche Mantelkühlungen bzw. die entsprechenden Kühlkanäle können z.B. in Form einer Spirale oder eines Mäanders ausgeführt sein. Aus der DE 10 2011 076 529 A1 und der DE 10 2018 200 365 A1 sind z.B. Mantelkühlungen bekannt, bei denen Kühlkanäle zwischen Einlass und Auslass für das Kühlmittel im Wesentlichen in Form einer Helix bzw. spiralförmig um den Mantel bzw. im Mantel verlaufen.

Man kann Mantelkühlungen auch in Form von Flachmantelkühlungen ausbilden, bei denen der Kühlkanal im Grunde ein flacher Kanal mit einer Breite, die zumindest annähernd der axialen Länge des gesamten Mantels entspricht, ist, der sich in Umfangsrichtung um den Mantel erstreckt. Eine große Herausforderung bei einem solchen flachen Kühlkanal bzw. Flachkanal ist es, die Strömung bzw. das Kühlmittel gleichmäßig durch den Kühlkanal strömen zu lassen. Durch das große Verhältnis von Breite (in axialer Richtung des Mantels gesehen) zu Dicke bzw. Kanalhöhe (in radialer Richtung des Mantels gesehen) neigt die Strömung im Flachkanal zur Ablösung, sodass sich der Hauptmassenstrom in kleinen Gebieten konzentriert. Dadurch können in anderen Bereichen sog. Totwassergebiete mit geringen Strömungsgeschwindigkeiten und niedrigem Wärme- und Stofftransport entstehen, was zu erhöhten Temperaturen führt. Dieses Problem kann zwar mit Leitschaufeln oder radial mittiger Einströmung (d.h. einem mittig angeordneten Einlass) gelöst werden, jedoch sind Leitschaufeln komplex herzustellen und eine radiale Einströmung vergrößert das Packaging, also die Ausma-ße der elektrischen Maschine.

Aus der US 2005/0268464 A1 ist eine Kühleinheit bekannt; dort ist ein Einlass vorgesehen, der rinnenförmig ist und an den sich der Kühlkanal in Umfangsrichtung gesehen mit geringerer Dicke anschließt. Der Kühlkanal selbst ist durch vier separate, schmale Kühlkanäle gebildet, die zusammen weniger als die Hälfte der axialen Länge des Kühlmantels ausmachen.

### Offenbarung der Erfindung

Erfindungsgemäß werden eine Kühleinheit und eine elektrische Maschine sowie ein Verfahren zum Herstellen einer solchen Kühleinheit mit den Merkmalen der unabhängigen Patentansprüche vorgeschlagen. Vorteilhafte Ausgestaltungen sind Gegenstand der Unteransprüche sowie der nachfolgenden Beschreibung.

Die Erfindung geht aus von einer Kühleinheit für eine elektrische Maschine, mit einem zumindest im Wesentlichen hohlzylinderförmigen Mantel, einem in dem Mantel ausgebildeten Kühlkanal, der sich in Umfangsrichtung des Mantels mit einer einem Großteil der axialen Länge des Mantels entsprechenden Breite erstreckt, und einem Einlass und einem Auslass für Kühlmittel, die mittels des Kühlkanals verbunden sind und die jeweils an einem, bevorzugt am gleichen, axialen Ende des Mantels angeordnet sind. Hierbei handelt es sich also um eine schon erwähnte Flachmantelkühlung.

Darunter, dass der Kühlkanal sich in Umfangsrichtung des Mantels mit einer einem Großteil der axialen Länge des Mantels entsprechenden Breite erstreckt, soll erfindungsgemäss verstanden werden, dass die Breite des Kühlkanals (die in axialer Richtung des Mantels zu sehen ist), mehr als 50% der axialen Länge des Mantels entspricht, zweckmäßigerweise aber mehr als 80% oder gar mehr als 90%, letztlich also abgesehen von nötigen Wänden und dergleichen auch der axialen Länge des Mantels entsprechen kann.

Der Kühlkanal erstreckt sich dabei zweckmäßigerweise auch annähernd um den gesamten Umfang des Mantels, z.B. über zumindest 95% des Umfangs. Zweckmäßigerweise kann der Kühlkanal dabei einem umlaufenden Kanal entsprechen, der durch einen axialen Steg bzw. eine Trennwand geteilt ist.

Wie schon erwähnt, stellt sich bei solchen Kühleinheiten bzw. Kühlkanälen das Problem, dass am Einlass an einem axialen Ende eintretendes Kühlmittel sich nicht hinreichend gut im gesamten Kühlkanal verteilt bzw. diesen nicht ausreichend gut abdeckt, was der Kühleffektivität abträglich ist. Für eine Veranschaulichung bzw. nähere Erläuterung dieser Problematik sei auf die Figuren sowie die zugehörige Beschreibung verwiesen.

Vor diesem Hintergrund schlägt die Erfindung nun vor, dass der Kühlkanal einen sich an den Einlass anschließenden, rinnenförmigen Einlassbereich aufweist, der sich vom Einlass in axialer Richtung des Mantels über die Breite des Kühlkanals erstreckt, und dass der Kühlkanal einen sich an den Einlassbereich, in Umfangsrichtung des Mantels gesehen, anschließenden Drosselbereich aufweist, in dem eine Kanalhöhe (oder Dicke) des Kühlkanals, in radialer Richtung des Mantels gesehen, geringer ist als im Einlassbereich. Bevorzugt ist es, wenn die Kanalhöhe des Kühlkanals im Drosselbereich höchstens 50% der Kanalhöhe des Einlassbereichs beträgt. Die erforderliche Querschnittsänderung zum Drosselspalt hin ist ein Designparameter und kann mit Fokus auf einen gesamten Druckverlust und eine ggf. erforderliche Homogenisierung der Strömung optimiert werden.

Bei dem rinnenförmigen Einlassbereich kann es sich also um eine Art Rinne bzw. Einlassrinne handeln, in welche das Kühlmittel, wenn es durch den Einlass, z.B. eine Bohrung, in den Kühlkanal einströmt, zunächst eintritt. Darin kann sich das Kühlmittel dann - aufgrund der relativ großen Kanalhöhe und des damit einhergehenden großen Strömungsquerschnitts dieser Einlassrinne - verlustarm und gleichmäßig über die gesamte Breite des Kühlkanals - also die axiale Länge des Mantels - verteilen bzw. ausbreiten.

Aufgrund der Massenträgheit des axial einströmenden Kühlmittels ist die Strömung bestrebt, ihre Bewegungsrichtung beizubehalten. Erst nahe der Gegenseite des Einlasses (also am dem Einlass gegenüberliegenden Ende des Einlassbereichs, in axialer Richtung gesehen) wird die Bewegungsenergie des Kühlmittels durch Abbremsung in statischen Druck umgewandelt. Dieses dadurch entstehende statische Druckfeld sorgt für die Umlenkung des Kühlmittels in Umfangsrichtung. Damit sich die Strömung nicht im lokal sehr begrenzten Bereich des Druckfeldes (nahe der Kanalwand an der Gegenseite) konzentriert, wird die Strömung tangential, d.h. in Umfangsrichtung, durch den Drosselbereich (bzw. eine Art Drosselspalt) geleitet, also einen Bereich mit geringem Strömungsquerschnitt.

In diesem Drosselbereich bzw. Drosselspalt entsteht in denjenigen Bereichen bzw. Gebieten ein größerer Druckverlust, in denen das Kühlmittel schnell fließt, die Strömung also schnell ist. Da Konzentrationen des Massenstroms (sog. Freistrahle, Strömungen ohne direkten Wandkontakt) mit großer Strömungsgeschwindigkeit einhergehen, entsteht durch den Druckverlust eine Verdrängung der nachfolgenden Strömung und damit eine Ausweitung des umlenkenden statischen Druckfelds. Durch diesen Effekt erfährt die Strömung bereits kurz nach Eintritt in die Einlaufrinne eine umlenkende Druckkraft und wird gleichmäßig über die gesamte Breite des Kühlkanals verteilt.

Vorzugsweise weist der Kühlkanal im Einlassbereich eine Stufe auf, mit der der Einlassbereich bzw. die Einlassrinne, in axialer Richtung des Mantels gesehen, in zwei Teile mit, in radialer Richtung des Mantels gesehen, unterschiedlicher Kanalhöhe geteilt wird, wobei die Kanalhöhe auf Seiten des Einlasses größer ist. Mit anderen Worten wird der Strömungsquerschnitt im Einlassbereich und in axialer Richtung des Mantels gesehen an der Stufe geringer. Diese Stufe ist, in axialer Richtung des Mantels gesehen, zweckmäßigerweise in dem Bereich (oder bei mehreren Stufen ggf. in denjenigen Bereichen) vorzusehen, in dem der Hauptmassenstrom umgelenkt werden soll. Insbesondere also im Bereich nahe der Gegenwand des Kanals, bevorzugt jedoch über die ganze Breite des Kühlkanals. Denkbar ist z.B., dass die Stufe in einem Bereich zwischen 15% und 50% der Breite des Kühlkanals vom Einlass aus gesehen vorgesehen ist.

Eine solche Stufe, insbesondere kurz hinter dem Einlass, kann besonders einfach erhalten werden, indem der Einlass, wenn dieser als Bohrung ausgeführt wird, sozusagen etwas verlängert wird (dies ist in den Figuren zu sehen). Zudem werden damit strömungsmechanische Vorteile erreicht ist. Trifft die Strömung bzw. das Kühlmittel direkt nach bzw. kurz nach dem Einlass auf diese Stufe, so erhöht sich der statische Druck lokal und es bildet sich ein Druckfeld aus. Die nachfolgende Strömung erfährt durch dieses Druckfeld eine Ablenkung in tangentialer bzw. umfänglicher Richtung (also in den Kühlkanal hinein). So sorgt die Stufe dafür, dass das Ablösegebiet am Kühlkanal nahe dem Einlass verkleinert wird.

Weiterhin weist der Kühlkanal einen sich an den Drosselbereich, in Umfangsrichtung des Mantels gesehen, anschließenden Normalbereich auf, in dem eine Kanalhöhe des Kühlkanals, in radialer Richtung des Mantels gesehen, größer ist als im Drosselbereich, bevorzugt aber geringer als im Einlassbereich. Dort kann das Kühlmittel, nachdem es sich zuvor gleichmäßig über die Breite des Kühlkanals verteilt hat, regulär entlang fließen. In diesem Normalbereich kann die Kanalhöhe des Kühlkanals dann auch wie bei einem herkömmlichen, flachen

Kühlkanal sein, um die mit dem Drosselspalt einhergehenden Druckverluste so klein wie möglich zu halten. Die Drosselwirkung kann dabei sowohl durch eine Verringerung der Kanalhöhe als auch durch eine Vergrößerung der Drosselspaltlänge in Umfangsrichtung erreicht werden. Zweckmäßigerweise sollte die Länge des Drosselbereichs mindestens die Drosselspalthöhe (also die Kanalhöhe im Drosselbereich) und maximal 50% der axialen Kühlkanallänge (also der vorstehend schon erwähnten Breite des Kühlkanals) betragen. Denkbar ist aber auch, dass diese umfängliche Länge maximal 50% des gesamten Umfangs, sprich der Länge des Kühlkanals beträgt.

Vorteilhafterweise weist der Kühlkanal einen sich an den Normalbereich anschließenden, rinnenförmigen Auslassbereich auf, an den sich der Auslass anschließt und der sich in axialer Richtung des Mantels über die Breite des Kühlkanals erstreckt, und wobei in dem Auslassbereich eine Kanalhöhe des Kühlkanals, in radialer Richtung des Mantels gesehen, größer ist als im Normalbereich. Zweckmäßigerweise weist der Kühlkanal im Auslassbereich eine Stufe auf, mit der der Auslassbereich, in axialer Richtung des Mantels gesehen, in zwei Teile mit, in radialer Richtung des Mantels gesehen, unterschiedlicher Kanalhöhe geteilt wird, wobei die Kanalhöhe auf Seiten des Auslasses größer ist. Insbesondere ist die Stufe im Auslassbereich, in axialer Richtung des Mantels und vom Auslass aus gesehen, in einem Bereich zwischen 15% und 85%, bevorzugt zwischen 15% und 50%, der Breite des Kühlkanals angeordnet (so wie dies auch für die Stufe im Einlassbereich gilt). Der Auslassbereich kann dabei, insbesondere auch in Bezug auf die Kanalhöhe und Stufe, wie der Einlassbereich ausgebildet sein, sodass auch auf die dortigen Ausführungen verwiesen werden kann, die hier entsprechend gelten. Der Einlassbereich und der Auslassbereich können dabei auf den beiden Seiten einer schon erwähnten axialen Trennwand angeordnet sein.

Im Unterschied zum Anfang des Kühlkanals, wo sich an den Einlassbereich der Drosselbereich anschließt, ist am Ende des Kühlkanals kein Drosselbereich nötig, da keine Verteilung des Kühlmittels mehr erforderlich ist. Vielmehr kann sich der Auslassbereich bzw. die Auslassrinne direkt an den Normalbereich anschlie-ßen. Die Stufe hat hier dann insbesondere auch nur noch fertigungstechnische Vorteile, allerdings erlaubt der erhöhte Strömungsquerschnitt im Auslassbereich einen geringen Druckverlust.

Insgesamt kann der Normalbereich dann, in Umfangsrichtung des Mantels gesehen, z.B. zwischen 50% und 90% der gesamten Länge des Kühlkanals ausmachen.

Das vorgeschlagene Design eines (axial angeströmten) flachen Kühlkanals bzw. Flachkanals weist die Vorteile eines niedrigen Druckverlusts und einer homogenen Verteilung der Strömungsgeschwindigkeit über den gesamten Umfang auf. Dabei ist eine solche Kühleinheit günstig zu fertigen, da die Teile des Gehäuses durch das sog. Pott-in-Pott-Verfahren bzw. Topf-in-Topf-Verfahren (Druckguss) hergestellt und mit zweiteiligen Formwerkzeugen axial entformt werden können. Es sind lediglich zwei Bohr-Operationen für Einlass und Auslass, aber keine Elemente wie Leitschaufeln oder Strukturen notwendig.

Gegenstand der Erfindung ist weiterhin eine elektrische Maschine mit einer erfindungsgemäßen Kühleinheit. Diese kann dabei insbesondere einen Stator der elektrischen Maschine umgeben.

Gegenstand der Erfindung ist außerdem ein Verfahren zum Herstellen einer solchen Kühleinheit, bei dem insbesondere das Topf-in-Topf-Verfahren verwendet wird.

Hinsichtlich der Vorteile und weiterer Ausgestaltungen der elektrischen Maschine und des Verfahrens sei zur Vermeidung von Wiederholungen auf vorstehenden Ausführungen zur Kühleinheit verwiesen, die hier entsprechend gelten.

Weitere Vorteile und Ausgestaltungen der Erfindung ergeben sich aus der Beschreibung und der beiliegenden Zeichnung.

Die Erfindung ist anhand von Ausführungsbeispielen in der Zeichnung schematisch dargestellt und wird im Folgenden unter Bezugnahme auf die Zeichnung beschrieben.

Kurze Beschreibung der Zeichnungen
- Figur 1: zeigt schematisch eine erfindungsgemäße elektrische Maschine mit einer Kühleinheit in einer bevorzugten Ausführungsform.
- Figur 2: zeigt eine nicht erfindungsgemäße Kühleinheit.
- Figuren 3 und 4: zeigen eine erfindungsgemäße Kühleinheit in einer bevorzugten Ausführungsform.

### Ausführungsform(en) der Erfindung

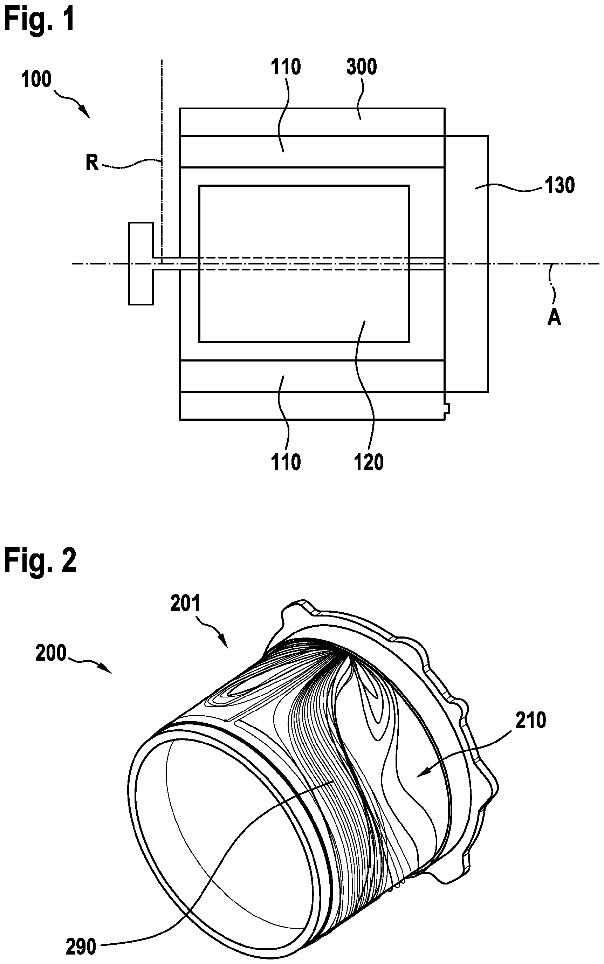

In Figur 1 ist schematisch eine erfindungsgemäße elektrische Maschine 100 mit einer Kühleinheit 300 in einer bevorzugten Ausführungsform dargestellt. Die elektrische Maschine 100 weist einen Stator 110 und einen innerhalb des Stators 110 angeordneten Rotor 120, der um eine Rotationsachse A - die auch eine axiale Richtung definiert - drehbar ist, auf. Mit R ist entsprechend eine radiale Richtung bezeichnet.

Außerdem ist eine Steuer- und Regeleinheit 130 angebracht, welche insbesondere einen sog. Inverter aufweist.

Die Kühleinheit 300 weist einen zumindest im Wesentlichen hohlzylinderförmigen Mantel auf bzw. ist im Wesentlichen mantelförmig ausgebildet und um den Stator 110 angeordnet. Hinsichtlich der näheren Ausgestaltung der Kühleinheit sei auf die nachfolgenden Figuren mit zugehöriger Beschreibung verwiesen.

In Figur 2 ist eine nicht erfindungsgemäße Kühleinheit 200 in einer perspektivischen Ansicht dargestellt. Die Kühleinheit 200 weist einen im Wesentlichen hohlzylinderförmigen Mantel 201 auf, von dem zumindest ein Teil gezeigt ist. In dem Mantel 201 ist ein Kühlkanal 210 vorgesehen bzw. ausgebildet, der sich in Umfangsrichtung des Mantels mit einer einem Großteil der axialen Länge des Mantels entsprechenden Breite erstreckt. Damit ist im Grunde fast die gesamte Grö-ße des Mantels, von Seitenwänden abgesehen, für den Kühlkanal genutzt.

Neben dem dargestellten Mantel 201 bzw. dem Teil davon ist typischerweise noch ein äußeres Teil vorhanden, das den Kühlkanal, wie er hier gezeigt ist, abdeckt bzw. verschließt, sodass das Kühlmittel innerhalb des Mantels fließen kann. Der Übersichtlichkeit und der Sichtbarkeit des Kühlkanals halber ist dies hier jedoch nicht gezeigt.

Weiterhin sind mit dem Bezugszeichen 290 Strömungslinien gezeigt, die sich von einem Einlass (der hier nicht explizit gezeigt bzw. bezeichnet ist) in axialer Richtung vom (in der Figur 2) rechten Ende zum linken Ende hin erstrecken, dann in Umfangsrichtung abgelenkt werden, den Kühlkanal 210 in Umfangsrichtung durchlaufen und dann wieder in axialer Richtung zu einem Auslass (der hier ebenfalls nicht explizit gezeigt bzw. bezeichnet ist) hin verlaufen.

Anhand dieser Strömungslinien 290 ist deutlich zu sehen, dass ein Großteil des Kühlkanals nicht von der Strömung durchsetzt ist, d.h. dort bewegt sich das Kühlmittel nicht oder allenfalls geringfügig. Entsprechend wird dort keine bzw. kaum Kühlleistung erreicht.

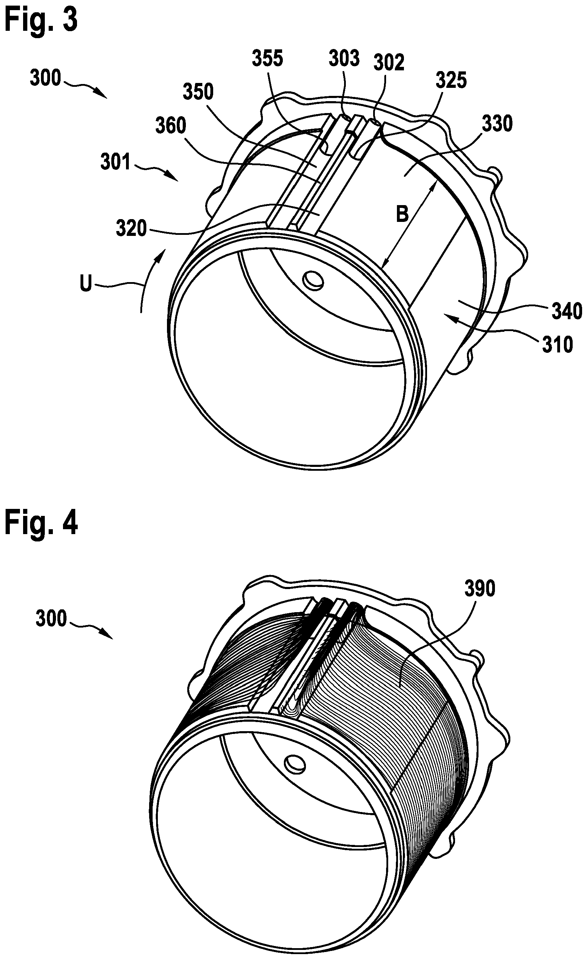

In Figur 3 ist eine erfindungsgemäße Kühleinheit 300 in einer bevorzugten Ausführungsform in perspektiver Ansicht dargestellt. Die Kühleinheit 300 weist einen im Wesentlichen hohlzylinderförmigen Mantel 301 auf, von dem zumindest ein Teil gezeigt ist. In dem Mantel 301 ist ein Kühlkanal 310 vorgesehen bzw. ausgebildet, der sich in Umfangsrichtung des Mantels mit einer einem Großteil der axialen Länge des Mantels entsprechenden Breite B erstreckt. Damit ist im Grunde fast die gesamte Größe des Mantels, von Seitenwänden abgesehen, für den Kühlkanal genutzt. Insofern entspricht die grundlegende Form des Kühlkanals 310 derjenigen des Kühlkanals 210 gemäß Figur 2.

Neben dem dargestellten Mantel 301 bzw. dem Teil davon ist erfindungsgemäss, wie auch schon zu Figur 2 erwähnt, noch ein äußeres Teil vorhanden, das den Kühlkanal, wie er hier gezeigt ist, abdeckt bzw. verschließt, sodass das Kühlmittel innerhalb des Mantels fließen kann. Der Übersichtlichkeit und der Sichtbarkeit des Kühlkanals halber ist dies hier jedoch nicht gezeigt.

Weiterhin weist der Mantel 301 einen Einlass 302 und einen Auslass 303 für Kühlmittel auf, die beide an einem axialen Ende des Mantels 300 angeordnet sind und die über den Kühlkanal 310 verbunden sind.

Weiterhin weist der Kühlkanal 310 einen sich an den Einlass 302 anschließenden, rinnenförmigen Einlassbereich 320 auf, weiterhin einen sich an diesen Einlassbereich 320, in Umfangsrichtung U gesehen, anschließenden Drosselbereich 330, einen sich daran anschließenden Normalbereich 340 sowie einen sich daran anschließenden, rinnenförmigen Auslassbereich 350, an den sich dann der Auslass 303 anschließt. Der Kühlkanal 310 weist damit verschiedene Abschnitte bzw. Bereiche auf, die sich insbesondere hinsichtlich ihrer, in radialer Richtung gesehen, Dicke bzw. Kanalhöhe - und damit ihrem Strömungsquerschnitt - unterscheiden, jedenfalls soweit diese Bereiche aneinander angrenzen.

Der rinnenförmige Einlassbereich 320 bzw. die Einlassrinne weist eine größere Kanalhöhe als der sich daran anschließende Drosselbereich 330 auf, dieser wiederum weist eine geringere Kanalhöhe als der sich an diesen anschließende Normalbereich 340 auf. Dieser Normalbereich 340 wiederum weist eine geringere Kanalhöhe als der Einlassbereich 320 auf, sodass die Kanalhöhe des Normalbereichs 340 zwischen denjenigen von Einlassbereich 320 und Drosselbereich 330 liegt oder der Kanalhöhe des Einlassbereichs 320 entspricht.

Der rinnenförmige Auslassbereich 350 wiederum weist vorteilhafterweise eine größere Kanalhöhe als der Normalbereich 340 auf. Der Einlassbereich 320 und der Auslassbereich 350 sind zweckmäßigerweise hinsichtlich ihrer Kanalhöhe(n) gleichartig ausgebildet.

Der Einlassbereich 320 weist weiterhin eine Stufe 325 auf, mit der der Einlassbereich 320, in axialer Richtung des Mantels gesehen, in zwei Teile mit, in radialer Richtung R des Mantels gesehen, unterschiedlicher Kanalhöhe geteilt wird, wobei die Kanalhöhe auf Seiten des Einlasses 302 größer ist als auf der dem Einlass abgewandten axialen Seite. Auf diese Weise wird durch den Einlass 302 einströmendes Kühlmittel an der Stufe 325 teilweise in Umfangsrichtung U abgelenkt. Dort strömt es dann durch den Drosselbereich 330 in den Normalbereich 340.

Der Auslassbereich 350 weist, wie auch der Einlassbereich, eine Stufe 355 auf, die ebenfalls den Auslassbereich 350 in zwei Teile mit, in radialer Richtung des Mantels gesehen, unterschiedlicher Kanalhöhe geteilt wird, wobei die Kanalhöhe auf Seiten des Auslasses 303 größer ist als auf der dem Auslass abgewandten axialen Seite. Einlassbereich 320 und Auslassbereich 350 sind erfindungsgemäss durch eine axiale Trennwand 360 voneinander getrennt.

Bei dieser Kühleinheit 300 kann das Kühlmittel bzw. die Strömung in dem Kühlkanal nun deutlich besser bzw. gleichmäßiger verteilt werden, als dies bei der Kühleinheit 200 gemäß Figur 2 der Fall ist. Hierzu ist in Figur 4 die Kühleinheit 300 erneut gezeigt, jedoch mit Strömungslinien 390, ähnlich wie sie auch in Figur 2 gezeigt sind.

Diese Strömungslinien 390 erstrecken sich vom Einlass in axialer Richtung vom (in der Figur 4) rechten Ende zum linken Ende hin, werden dann in Umfangsrichtung U abgelenkt, durchlaufen den Kühlkanal in Umfangsrichtung und dann wieder in axialer Richtung zum Auslass hin.

Anhand dieser Strömungslinien 390 ist deutlich zu sehen, dass der Kühlkanal fast vollständig von der Strömung durchsetzt ist, was eine besonders gute Kühlleistung erlaubt.

## Patentansprüche

1. Kühleinheit (300) für eine elektrische Maschine (100), mit einem zumindest im Wesentlichen hohlzylinderförmigen Mantel (301), einem in dem Mantel ausgebildeten Kühlkanal (310), der sich in Umfangsrichtung (U) des Mantels mit einer einem Großteil der axialen Länge des Mantels entsprechenden Breite (B) erstreckt, einem Einlass (302) und einem Auslass (303) für Kühlmittel, die mittels des Kühlkanals (310) verbunden sind und die jeweils an einem axialen Ende des Mantels (301) angeordnet sind, und einem äußeren Teil, das den Kühlkanal (310), abdeckt,
wobei der Kühlkanal (310) einen sich an den Einlass (302) anschließenden, rinnenförmigen Einlassbereich (320) aufweist, der sich vom Einlass (302) in axialer Richtung (A) des Mantels über die Breite (B) des Kühlkanals erstreckt,
wobei der Kühlkanal (310) einen Auslassbereich (350) aufweist, und wobei der Einlassbereich (320) und der Auslassbereich (350) durch eine axiale Trennwand (360) voneinander getrennt sind,
wobei der Kühlkanal (310) einen sich an den Einlassbereich (320), in Umfangsrichtung (U) des Mantels gesehen, anschließenden Drosselbereich (330) aufweist, in dem eine Kanalhöhe des Kühlkanals, in radialer Richtung (R) des Mantels gesehen, geringer ist als im Einlassbereich (320), **dadurch gekennzeichnet, dass** der Kühlkanal (310) einen sich an den Drosselbereich (330), in Umfangsrichtung (U) des Mantels gesehen, anschließenden Normalbereich (340) aufweist, in dem eine Kanalhöhe des Kühlkanals, in radialer Richtung (R) des Mantels gesehen, größer ist als im Drosselbereich (330), und
wobei die Breite des Kühlkanals, in axialer Richtung des Mantels gesehen, mehr als 50% der axialen Länge des Mantels entspricht.

2. Kühleinheit (300) nach Anspruch 1, wobei die Breite des Kühlkanals, in axialer Richtung des Mantels gesehen, mehr als 80% der axialen Länge des Mantels entspricht.

3. Kühleinheit (300) nach Anspruch 1 oder 2, wobei der Kühlkanal (310) im Einlassbereich (302) eine Stufe (325) aufweist, mit der der Einlassbereich (320), in axialer Richtung (A) des Mantels gesehen, in zwei Teile mit, in radialer Richtung (R) des Mantels gesehen, unterschiedlicher Kanalhöhe geteilt wird, wobei die Kanalhöhe auf Seiten des Einlasses (302) größer ist.

4. Kühleinheit (300) nach Anspruch 3, wobei die Stufe, in axialer Richtung (A) des Mantels und vom Einlass (302) aus gesehen, in einem Bereich zwischen 15% und 85%, bevorzugt zwischen 15% und 50%, der Breite (B) des Kühlkanals angeordnet ist.

5. Kühleinheit (300) nach einem der vorstehenden Ansprüche, wobei in dem Normalbereich (340) die Kanalhöhe des Kühlkanals, in radialer Richtung (R) des Mantels gesehen, geringer ist als im Einlassbereich (320).

6. Kühleinheit nach einem der vorstehenden Ansprüche, wobei der Drosselbereich (330), in Umfangsrichtung gesehen, eine Länge aufweist, die mindestens der Kanalhöhe im Drosselbereich (330) und/oder höchstens 50% der Breite (B) entspricht.

7. Kühleinheit (300) nach einem der vorstehenden Ansprüche, wobei der Auslassbereich (350) ein sich an den Normalbereich (340) anschließender, rinnenförmiger Auslassbereich (350) ist, an den sich der Auslass (303) anschließt und der sich in axialer Richtung (A) des Mantels über die Breite (B) des Kühlkanals erstreckt, und wobei in dem Auslassbereich (350) eine Kanalhöhe des Kühlkanals, in radialer Richtung (R) des Mantels gesehen, größer ist als im Normalbereich (340).

8. Kühleinheit (300) nach Anspruch 7, wobei der Kühlkanal (310) im Auslassbereich (350) eine Stufe (355) aufweist, mit der der Auslassbereich (350), in axialer Richtung (A) des Mantels gesehen, in zwei Teile mit, in radialer Richtung (R) des Mantels gesehen, unterschiedlicher Kanalhöhe geteilt wird, wobei die Kanalhöhe auf Seiten des Auslasses (303) größer ist.

9. Kühleinheit (300) nach Anspruch 8, wobei die Stufe (355) im Auslassbereich, in axialer Richtung (A) des Mantels und vom Auslass (303) aus gesehen, in einem Bereich zwischen 15% und 85%, bevorzugt zwischen 15% und 50%, der Breite (B) des Kühlkanals angeordnet ist.

10. Kühleinheit (300) nach einem der vorstehenden Ansprüche, wobei der Einlass (302) und der Auslass (303) am selben axialen Ende des Mantels angeordnet sind, und insbesondere als Bohrung ausgebildet sind.

11. Elektrische Maschine 1300) mit einer Kühleinheit (300) nach einem der vorstehenden Ansprüche.

12. Verfahren zum Herstellen einer Kühleinheit (300) nach einem der Ansprüche 1 bis 10, bei dem die Kühleinheit (300) unter Verwendung einer Innenform und zweier Hälften einer Außenform derart gebildet, vorzugsweise gegossen, wird, dass zur Entnahme der Kühleinheit (300) die zwei Hälften der Au-ßenform auseinandergezogen werden können.

13. Verfahren nach Anspruch 12, bei dem ein Topf-in-Topf-Verfahren verwendet wird.

## Claims

1. Cooling unit (300) for an electric machine (100), comprising an at least substantially hollow cylindrical shell (301), a cooling channel (310) formed in the shell and extending in the circumferential direction (U) of the shell with a width (B) corresponding to a majority of the axial length of the shell, an inlet (302) and an outlet (303) for coolant which are connected by means of the cooling channel (310) and which are each disposed at an axial end of the shell (301), and an outer part covering the cooling channel (310),
wherein the cooling channel (310) has a groove-shaped inlet region (320) adjoining the inlet (302) and extending from the inlet (302) in the axial direction (A) of the shell over the width (B) of the cooling channel,
wherein the cooling channel (310) has an outlet region (350), and wherein the inlet region (320) and the outlet region (350) are separated from each other by an axial divider wall (360),
wherein the cooling channel (310) has a throttle region (330) adjoining the inlet region (320), as seen in the circumferential direction (U) of the shell, in which a channel height of the cooling channel, as seen in the radial direction (R) of the shell, is lower than in the inlet region (320),
**characterised in that** the cooling channel (310) has a normal region (340) adjoining the throttle region (330), as seen in the circumferential direction (U) of the shell, in which a channel height of the cooling channel, as seen in the radial direction (R) of the shell, is greater than in the throttle region (330), and
wherein the width of the cooling channel, seen in the axial direction of the shell, corresponds to more than 50% of the axial length of the shell.

2. Cooling unit (300) according to claim 1, wherein the width of the cooling channel, seen in the axial direction of the shell, corresponds to more than 80% of the axial length of the shell.

3. Cooling unit (300) according to claim 1 or 2, wherein the cooling channel (310) in the inlet region (302) comprises a step (325) with which the inlet region (320), seen in axial direction (A) of the shell, is divided into two parts with, seen in radial direction (R) of the shell, different channel height, wherein the channel height on the side of the inlet (302) is greater.

4. Cooling unit (300) according to claim 3, wherein the step, seen in axial direction (A) of the shell and from the inlet (302), is arranged in a range between 15% and 85%, preferably between 15% and 50%, of the width (B) of the cooling channel.

5. Cooling unit (300) according to any of the preceding claims, wherein in the normal region (340) the channel height of the cooling channel, seen in radial direction (R) of the shell, is lower than in the inlet region (320).

6. Cooling unit according to any one of the preceding claims, wherein the throttling region (330), viewed in the circumferential direction, has a length which corresponds at least to the channel height in the throttling region (330) and/or at most to 50% of the width (B).

7. Cooling unit (300) according to any one of the preceding claims, wherein the outlet region (350) is a groove-shaped outlet region (350) adjoining the normal region (340), which is adjoined by the outlet (303) and which extends over the width (B) of the cooling channel in the axial direction (A) of the shell, and wherein in the outlet region (350) a channel height of the cooling channel, viewed in the radial direction (R) of the shell, is greater than in the normal region (340).

8. Cooling unit (300) according to claim 7, wherein the cooling channel (310) in the outlet region (350) comprises a step (355) with which the outlet region (350), seen in axial direction (A) of the shell, is divided into two parts with, seen in radial direction (R) of the shell, different channel height, wherein the channel height on the side of the outlet (303) is greater.

9. Cooling unit (300) according to claim 8, wherein the step (355) is arranged in the outlet region, as seen in the axial direction (A) of the shell and from the outlet (303), in a range between 15% and 85%, preferably between 15% and 50%, of the width (B) of the cooling channel.

10. Cooling unit (300) according to any one of the preceding claims, wherein the inlet (302) and the outlet (303) are arranged at the same axial end of the shell, and in particular are formed as a bore.

11. Electric machine (100) comprising a cooling unit (300) according to any one of the preceding claims.

12. Method of manufacturing a cooling unit (300) according to any one of claims 1 to 10, wherein the cooling unit (300) is formed, preferably cast, using an inner mould and two halves of an outer mould such that the two halves of the outer mould can be pulled apart to remove the cooling unit (300).

13. Method of claim 12, wherein a pot-in-pot method is used.

## Revendications

1. Unité de refroidissement (300) pour une machine électrique (100), comprenant une enveloppe (301) au moins sensiblement en forme de cylindre creux, un canal de refroidissement (310) formé dans l'enveloppe et s'étendant dans la direction circonférentielle (U) de l'enveloppe avec une largeur (B) correspondant à une grande partie de la longueur axiale de l'enveloppe, une entrée (302) et une sortie (303) pour le fluide de refroidissement, qui sont reliées au moyen du canal de refroidissement (310) et qui sont disposées chacune à une extrémité axiale de l'enveloppe (301), et une partie extérieure qui recouvre le canal de refroidissement (310),
le canal de refroidissement (310) présentant une zone d'entrée (320) en forme de gouttière se raccordant à l'entrée (302), qui s'étend depuis l'entrée (302) dans la direction axiale (A) de l'enveloppe sur la largeur (B) du canal de refroidissement,
dans lequel le canal de refroidissement (310) comprend une zone de sortie (350), et dans lequel la zone d'entrée (320) et la zone de sortie (350) sont séparées l'une de l'autre par une cloison axiale (360),
le canal de refroidissement (310) présentant une zone d'étranglement (330) se raccordant à la zone d'entrée (320), vue dans la direction périphérique (U) de l'enveloppe, dans laquelle une hauteur de canal du canal de refroidissement, vue dans la direction radiale (R) de l'enveloppe, est inférieure à celle dans la zone d'entrée (320),
**caractérisé en ce que** le canal de refroidissement (310) présente une zone normale (340) se raccordant à la zone d'étranglement (330), vue dans la direction circonférentielle (U) de l'enveloppe, dans laquelle une hauteur de canal du canal de refroidissement, vue dans la direction radiale (R) de l'enveloppe, est supérieure à celle dans la zone d'étranglement (330), et **en ce que** le canal de refroidissement (310) présente une hauteur de canal supérieure à celle dans la zone normale (340).
la largeur du canal de refroidissement, vu dans la direction axiale de l'enveloppe, correspondant à plus de 50% de la longueur axiale de l'enveloppe.

2. Unité de refroidissement (300) selon la revendication 1, dans laquelle la largeur du canal de refroidissement, vue dans la direction axiale de l'enveloppe, correspond à plus de 80% de la longueur axiale de l'enveloppe.

3. Unité de refroidissement (300) selon la revendication 1 ou 2, dans laquelle le canal de refroidissement (310) présente dans la zone d'entrée (302) un gradin (325) avec lequel la zone d'entrée (320), vue dans la direction axiale (A) de l'enveloppe, est divisée en deux parties avec, vue dans la direction radiale (R) de l'enveloppe, une hauteur de canal différente, la hauteur de canal étant plus grande du côté de l'entrée (302).

4. Unité de refroidissement (300) selon la revendication 3, dans laquelle le gradin, vu dans la direction axiale (A) de l'enveloppe et depuis l'entrée (302), est disposé dans une plage comprise entre 15% et 85%, de préférence entre 15% et 50%, de la largeur (B) du canal de refroidissement.

5. Unité de refroidissement (300) selon l'une des revendications précédentes, dans laquelle, dans la zone normale (340), la hauteur de canal du canal de refroidissement, vue dans la direction radiale (R) de l'enveloppe, est inférieure à celle dans la zone d'entrée (320).

6. Unité de refroidissement selon l'une quelconque des revendications précédentes, dans laquelle la zone d'étranglement (330), vue dans la direction circonférentielle, présente une longueur qui correspond au moins à la hauteur du canal dans la zone d'étranglement (330) et/ou au plus à 50% de la largeur (B).

7. Unité de refroidissement (300) selon l'une quelconque des revendications précédentes, dans laquelle la zone de sortie (350) est une zone de sortie (350) en forme de gouttière se raccordant à la zone normale (340), à laquelle se raccorde la sortie (303) et qui s'étend dans la direction axiale (A) de l'enveloppe sur la largeur (B) du canal de refroidissement, et dans laquelle, dans la zone de sortie (350), une hauteur de canal du canal de refroidissement, vue dans la direction radiale (R) de l'enveloppe, est supérieure à celle dans la zone normale (340).

8. Unité de refroidissement (300) selon la revendication 7, dans laquelle le canal de refroidissement (310) présente dans la zone de sortie (350) un gradin (355) avec lequel la zone de sortie (350), vue dans la direction axiale (A) de l'enveloppe, est divisée en deux parties avec, vue dans la direction radiale (R) de l'enveloppe, une hauteur de canal différente, la hauteur de canal étant plus grande du côté de la sortie (303).

9. Unité de refroidissement (300) selon la revendication 8, dans laquelle le gradin (355) est disposé dans la zone de sortie, dans la direction axiale (A) de l'enveloppe et vu depuis la sortie (303), dans une plage comprise entre 15% et 85%, de préférence entre 15% et 50%, de la largeur (B) du canal de refroidissement.

10. Unité de refroidissement (300) selon l'une quelconque des revendications précédentes, dans laquelle l'entrée (302) et la sortie (303) sont situées à la même extrémité axiale de l'enveloppe, et sont notamment formées par un alésage.

11. Machine électrique (100) avec une unité de refroidissement (300) selon l'une des revendications précédentes.

12. Procédé de fabrication d'une unité de refroidissement (300) selon l'une quelconque des revendications 1 à 10, dans lequel l'unité de refroidissement (300) est formée, de préférence moulée, en utilisant un moule interne et deux moitiés d'un moule externe, de telle sorte que, pour retirer l'unité de refroidissement (300), les deux moitiés du moule externe peuvent être écartées.

13. Procédé selon la revendication 12, dans lequel on utilise un procédé de type "pot dans le pot".
